Europäisches Patentamt

European Patent Office

Office européen des brevets

(11) Numéro de publication: **0 024 994**

**A1**

(12)

# DEMANDE DE BREVET EUROPEEN

(21) Numéro de dépôt: **80401226.8**

(22) Date de dépôt: **27.08.80**

(51) Int. Cl.³: **F 01 L 31/22**
**F 02 D 13/06**

(30) Priorité: **30.08.79 FR 7921796**

(43) Date de publication de la demande:
**11.03.81 Bulletin 81/10**

(84) Etats Contractants Désignés:
**BE CH DE GB IT LI NL**

(71) Demandeur: **SOCIETE D'ETUDES DE MACHINES THERMIQUES S.E.M.T.**
**2, Quai de Seine**
**F-93202 Saint-Denis(FR)**

(72) Inventeur: **Herrmann, Robert**
**34, avenue Jeanne Léger**
**F-78150 Le Chesnay(FR)**

(74) Mandataire: **Beauchamps, Georges et al,**
**Cabinet Z.Weinstein 20, avenue de Friedland**
**F-75008 Paris(FR)**

(54) **Procédé et dispositif pour améliorer le rendement d'un moteur à combustion interne par variation sélective du taux de compression selon le régime d'un moteur.**

(57) L'invention concerne un dispositif et un procédé de variation sélective du taux de compression d'un moteur à combustion interne selon le régime du moteur.

Le dispositif comprend dans la chaîne cinématique 34 de commande de chaque soupape d'admission (2) un moyen (10) provoquant la fermeture de la soupape d'admission avant l'instant normal de fermeture après le point mort bas et asservi au régime actuel du moteur de manière à ne fonctionner qu'aux faibles régimes ; et un moyen (11) prolongeant notablement la période d'ouverture de chaque soupape d'admission au-delà de l'instant normal de fermeture après le point mort bas en l'empêchant de se fermer entièrement à cet instant et n'agissant qu'aux régimes élevés.

Ce dispositif permet d'améliorer le rendement des moteurs à combustion interne.

Fig. 1.

1

<u>Procédé et dispositif pour améliorer le rendement
d'un moteur à combustion interne par variation
sélective du taux de compression effectif selon le
régime du moteur</u>

La présente invention a essentiellement pour objet
un procédé et un dispositif visant à améliorer le
rendement d'un moteur à combustion interne par
variation sélective du taux de compression effectif
selon le régime du moteur.

Plus particulièrement, la présente invention
concerne un procédé et un dispositif permettant
une variation sélective du taux de compression
selon le régime du moteur de façon à obtenir un
taux de compression maximum aux faibles régimes
et un taux de compression minimum aux régimes
élevés ce qui permet d'entraîner un abaissement
des charges mécaniques et thermiques aux régimes
élevés sans porter atteinte au rendement moteur
et sans altérer les qualités de démarrage de celui-ci.

Selon une solution connue préconisée par Miller,
on modifie le point de fermeture de la soupape
d'admission, en le situant près du point mort bas
aux faibles régimes et en l'avançant avant le point
mort bas aux régimes élevés, à l'aide d'un dispositif dont le galet de poussoir ou de brimbale de chaque soupape d'admission, prenant appui sur la came, est monté sur un bras pivotant autour d'un excentrique à position angulaire sélectivement réglable en fonction du régime du moteur en permettant ainsi de déplacer le galet relativement à sa came de commande résultant en un retard ou une avance à la fermeture normale de la soupape d'admission par modification du bras de levier crée par l'excentrique.

Cependant, ce dispositif présente l'inconvénient de provoquer la variation simultanée des instants d'ouverture et de fermeture de la soupape d'admission en décalant ainsi la courbe de levée de came de la soupape d'admission, ce qui décale ainsi les périodes de pleine ouverture de ladite soupape d'admission relativement au point mort haut et au point mort bas. En outre, ce dispositif connu complique sérieusement la construction mécanique de la chaîne cinématique de commande de chaque soupape d'admission s'étendant de l'arbre à came à la soupape tout en créant une commande par bras de levier qui nécessite encore de modifier la culbuterie et provoque souvent une usure prématurée des pièces. Par conséquent, ce dispositif est d'un emploi très limité en pratique.

L'invention a donc pour but principal de supprimer les inconvénients précités en fournissant une solution qui donne lieu à l'obtention d'un taux de compression effectif variable ce qui permet notamment de suralimenter des moteurs à taux de compression très élevés que l'on ne peut normalement pas suralimenter en raison des pressions maximales de combustion trop élevées, ou d'accroître dans des proportions importantes le taux de suralimentation des moteurs déjà suralimentés, en réduisant au minimum les inconvénients de leur fonctionnement au démarrage et aux charges partielles. En outre, cette solution doit être de préférence de conception particulièrement simple.

Cette solution consiste selon la présente invention en un procédé du type précédemment décrit, caractérisé en ce qu'aux faibles régimes on provoque la fermeture de chaque soupape d'admission avant l'instant normal de fermeture après le point mort bas en diminuant ainsi son retard à la fermeture tandis que lorsque le régime du moteur augmente au-delà d'un certain seuil pour lequel le moteur est considéré comme fonctionnement à un régime élevé, on prolonge notablement la période d'ouverture de chaque soupape d'admission au-delà de l'instant normal de fermeture après le point mort bas en l'empêchant de se fermer entièrement à cet instant mais en réduisant la section de passage entre la soupape et son siège à une valeur relativement faible par rapport à la section de passage maximale correspondant à la pleine ouverture de la soupape.

Selon une autre caractéristique de la présente invention, dans le cas d'un moteur comprenant une chaîne cinématique de commande de chaque soupape s'étendant de l'arbre à cames à ladite soupape inclus, le procédé est caractérisé en ce qu'aux faibles régimes, on introduit dans la chaîne cinématique de commande de chaque soupape d'admission une période de transmission avec retard de la commande de la came en provoquant ainsi la diminution précitée du retard à la fermeture de ladite soupape

4

d'admission ainsi qu'accessoirement une limitation de la levée de la soupape d'admission. De préférence, cette période de transmission avec retard est prévue de façon à obtenir une levée partielle de la soupape d'admission correspondant approximativement à 40 à 80% de la levée totale normale de la soupape d'admission.

Selon une autre caractéristique de l'invention, la section de passage réduite précitée entre la soupape d'admission et son siège, aux régimes élevés, est au maximum d'environ 20 à 60% de la section de passage libre d'ouverture maximale de ladite soupape d'admission.

Selon encore une caractéristique particulièrement intéressante du procédé de l'invention, on provoque la fermeture de la soupape d'admission au voisinage du point mort bas de préférence entre 0 et 20° d'angle de rotation de l'arbre à cames après le point mort bas, encore de préférence entre 10 et 15° d'angle de rotation de l'arbre à cames après le point mort bas, pour les faibles régimes.

Selon une autre caractéristique particulièrement intéressante du procédé de l'invention, aux régimes élevés, l'instant de fermeture retardé de la soupape d'admission est situé à environ 30 à 65°, de préférence 50 à 60°, d'angle de rotation de l'arbre à cames après le point mort bas.

La présente invention a également pour objet un dispositif permettant notamment la mise en oeuvre du procédé précité, caractérisé en ce qu'il comprend dans la chaîne cinématique de commande de chaque soupape d'admission un moyen provoquant une fermeture de la soupape d'admission avant l'instant normal de fermeture après le point mort bas et asservi au régime actuel du moteur de manière à ne fonctionner qu'aux faibles régimes ; et en ce qu'il comprend un moyen prolongeant notablement la période d'ouverture de chaque soupape d'admission au-delà de l'instant normal de fermeture après le point mort bas en l'empêchant de se fermer entièrement à cet instant, et n'agissant qu'aux régimes élevés.

Selon une autre caractéristique de ce dispositif, le moyen de fermeture avancée de la soupape d'admission, à faible régime, comprend un système de transmission avec retard de la commande de la came provoquant une course morte du profil de la came.

Selon une autre caractéristique particulièrement avantageuse de ce dispositif, le moyen de fermeture retardée de la soupape d'admission, aux régimes élevés, est formé par un bossage supplémentaire de la came de commande de chaque soupape d'admission permettant un maintien d'ouverture résiduelle de celle-ci et qui se raccorde de façon sensiblement continue et progressive par ses extrémités opposées, respectivement au bossage principal de commande d'ouverture et de fermeture de la soupape d'admission et au profil circulaire de base de la came.

Le dispositif de l'invention, suivant un mode de réalisation préférentiel, est caractérisé en ce que le système de transmission avec retard précité est formé par un vérin hydraulique intercalé dans la chaîne cinématique de commande de chaque soupape d'admission en la séparant ainsi en deux parties dont l'une est liée de manière cinématiquement compatible au corps du vérin tandis que l'autre partie est liée au piston du vérin également de manière cinématiquement compatible. De préférence, le vérin hydraulique comprend au moins une conduite d'admission d'un fluide hydraulique incompressible entre l'extrémité du corps liée à la chaîne cinématique et le piston et comportant un moyen anti-retour tel qu'un clapet ; et au moins une conduite d'échappement dudit fluide hors du vérin, ladite conduite d'échappement étant pourvue d'un moyen de communication, tel qu'une vanne, commandé par un organe externe asservi à la valeur actuelle du régime du moteur de manière à permettre le passage du fluide aux faibles régimes et à l'empêcher aux régimes élevés.

D'autres buts, avantages caractéristiques et détails de la présente invention apparaîtront plus clairement à la lumière de la description explicative qui va suivre faite en référence aux dessins annexés représentant deux modes de réalisation actuellement préférés de la présente invention, donnés simplement à titre d'exemple. Dans les dessins :

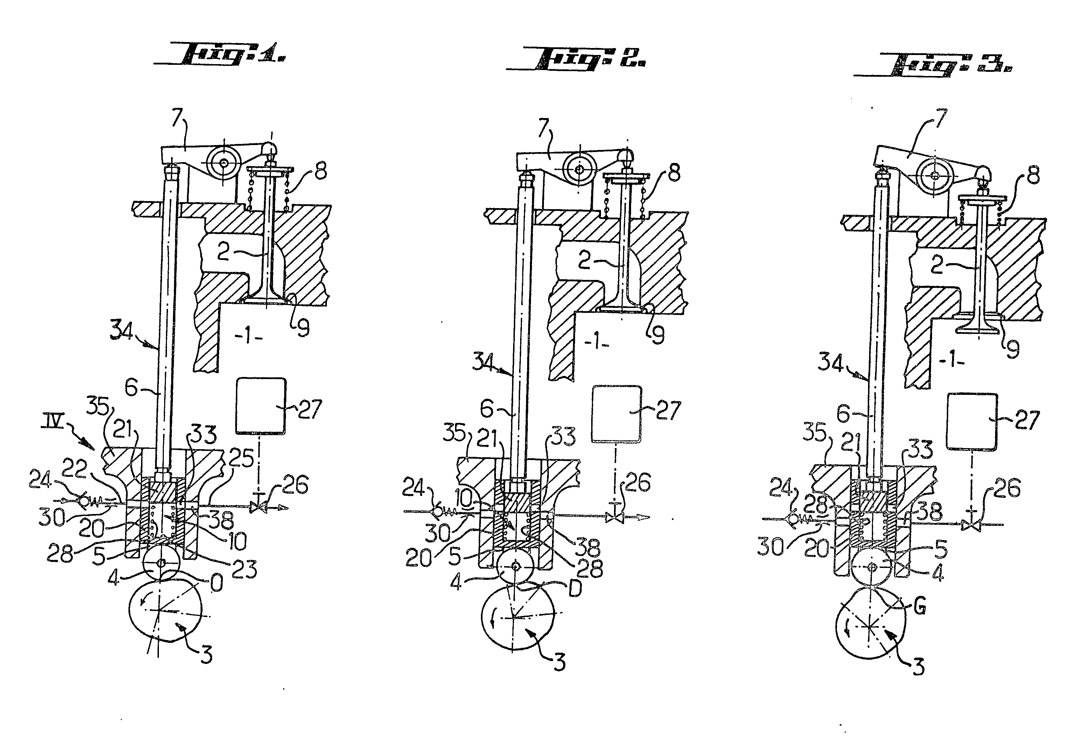

Les figures 1 à 3 représentent diverses vues en coupe transversale verticale partielle d'un moteur Diesel, au niveau d'une soupape d'admission, dont la chaîne cinématique de commande s'étendant de l'arbre à cames à ladite soupape inclus, comporte suivant un premier mode de réalisation, un dispositif conforme à l'invention, lesdites vues permettant d'illustrer successivement les différentes étapes du procédé de l'invention, notamment aux faibles régimes ;

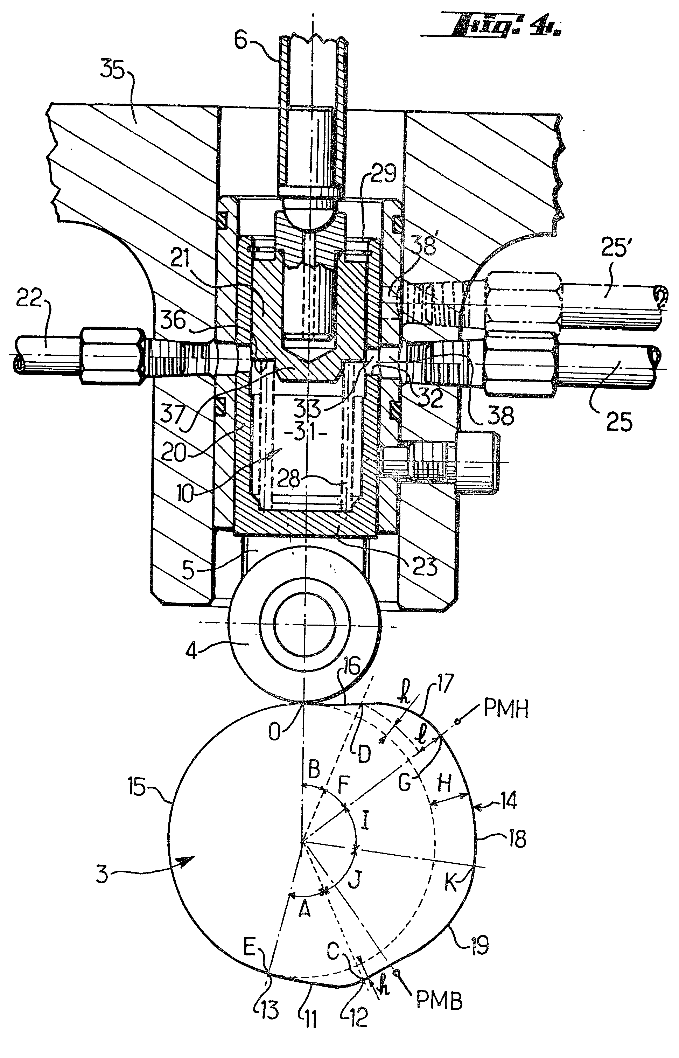

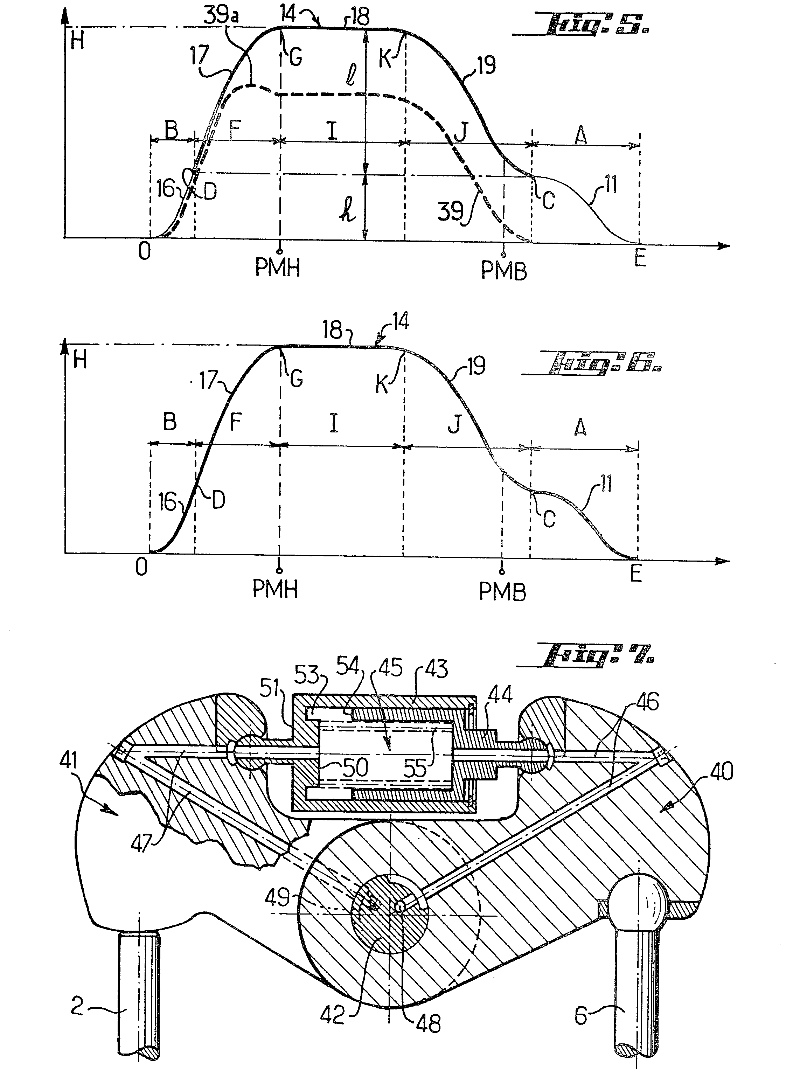

La figure 4 représente une vue de détail agrandie suivant la flèche IV de la figure 1, et représente également en traits mixtes une variante possible du dispositif de l'invention ;

Les figures 5 et 6 représentent le profil développé de la came de la soupape d'admission, en ordonnée, en fonction de l'angle de rotation de l'arbre à cames, en abscisse, respectivement pour les faibles régimes (figure 5) et pour les régimes élevés (figure 6), le profil de la came correspondant à une ouverture effective de la soupape d'admission étant représenté en trait fort. A la figure 5, on a représenté en outre en pointillés le profil développé de la levée de la soupape d'admisssion obtenu selon la variante de réalisation représentée en traits mixtes à la figure 4 ; et

La figure 7 représente en coupe partielle, avec arrachement, un deuxième mode de réalisation d'un dispositif selon la présente invention réalisé au niveau des culbuteurs.

En référence aux figures 1 à 4, chaque cylindre 1 d'un moteur à combustion interne, de préférence suralimenté, et notamment un moteur Diesel, comporte au moins une soupape d'admission 2 commandée par l'intermédiaire d'une chaîne cinématique de commande indiquée schématiquement par le nombre de référence 34 depuis une came 3 solidaire d'un arbre à cames (non représenté), et au moins une soupape d'échappement (non représentée). La chaîne cinématique de commande 34 comprend plus particulièrement un galet 4 prenant appui sur la came 3 et monté sur un poussoir 5 solidaire d'une tige de culbuteur 6 reliée à un culbuteur 7 agissant sur la soupape 2, et un ressort de rappel 8 tendant à fermer la soupape 2 en la ramenant sur son siège 9.

Selon un premier mode de réalisation du dispositif selon la présente invention, celui-ci comprend dans la chaîne cinématique de commande 34 de chaque soupape d'admission 2 un moyen 10 provoquant la fermeture de la soupape d'admission 2 avant l'instant normal de fermeture après le point mort bas, ainsi qu'accessoirement une levée partielle de la soupape d'admission. Par ailleurs, ce moyen 10 est asservi au régime actuel du moteur de manière à ne fonctionner qu'aux faibles régimes. De même, le dispositif de l'invention comprend un moyen prolongeant notablement la période d'ouverture de chaque soupape d'admission 2 au-delà de l'instant normal de fermeture après le point mort bas en l'empêchant de se fermer entièrement à cet instant, et n'agissant qu'aux régimes élevés. Dans l'exemple représenté aux figures 1 à 3, ce moyen est formé par un bossage supplémentaire 11 de la came de commande 3 de chaque soupape d'admission 2 et que l'on voit plus en détail à la figure 4, permettant un maintien d'ouverture résiduelle de celle-ci et qui se raccorde de façon sensiblement continue et progressive par ses extrémités opposées 12, 13 (voir figure 4) respectivement au bossage principal 14 de commande d'ouverture et de fermeture de la soupape d'admission 2 et au profil circulaire de base 15 de la came 3.

Selon une caractéristique préférentielle de ce dispositif conforme à la présente invention, la hauteur radiale maximale h du bossage supplémentaire 11 relativement au profil circulaire de base 15 de la came est comprise entre 20 et 60% de la hauteur radiale H de la partie circulaire 18 du bossage principal 14 relativement au profil de base 15 de la came 3.

Selon une autre caractéristique particulière du dispositif de l'invention, le moyen 10 de levée partielle de fermeture avancée de la soupape d'admission à faible régime comprend un système de transmission avec retard de la commande de la came 3 provoquant une course morte du profil de la came, pour les faibles charges, représentée par l'angle au centre A figures 4 et 5 permettant ainsi de fermer la soupape au point C. Avantageusement , cette course morte est prévue pour correspondre à une hauteur radiale du profil de la came sensiblement égale à la hauteur radiale h du bossage supplémentaire 11 de sorte que l'angle au centre A correspondant à la course morte précitée correspond également à l'angle au centre dont est capable la portion du bossage supplémentaire 11 précité.

Selon le premier mode de réalisation qui est représenté aux figures 1 à 4, le système de transmission avec retard 10 est formé par un vérin hydraulique intercalé dans la chaîne cinématique de commande 34 de chaque soupape d'admission 2 en la séparant ainsi en deux parties dont l'une est liée de manière cinématiquement compatible au corps 20 du vérin 10 tandis que l'autre partie est liée au piston 21 du vérin 10 également de manière cinématiquement compatible. Dans l'exemple représenté aux figures 1 à 4, la partie de la chaîne cinématique de commande 34 liée au corps 20 du vérin 10 est constituée par le poussoir 5 qui est pratiquement confondu avec le corps 20 du vérin et le galet 4 reposant sur la came 3 tandis que l'autre partie liée au piston 21 du vérin 10 est constituée par la tige de culbuteur 6 et le culbuteur 7.

Selon une autre caractéristique avantageuse, le vérin hydraulique 10 comprend au moins une conduite d'admission 22 d'un fluide hydraulique incompressible entre l'extrémité 23 du corps 20 liée à la chaîne cinématique de commande 34 (figure 4) et le piston 21, et comportant un moyen 24 anti-retour tel qu'un clapet ; et au moins une conduite d'échappement 25 dudit fluide hors du vérin 10, ladite conduite d'échappement 25 étant pourvue d'un moyen de communication 26 tel qu'une vanne, commandé par un organe externe 27 (figures 1 à 3) asservi à la valeur actuelle du régime du moteur de manière à commander l'ouverture du moyen de communication 26 aux faibles régimes et à commander la fermeture de ce moyen 26 au-delà d'un certain seuil pour lequel le moteur est considéré comme fonctionnant à un régime élevé.

Selon une autre caractéristique particulière de l'invention, la conduite d'admission 24 débouche dans le carter 35 d'huile du moteur et comprend au moins une pompe d'alimentation en huile du vérin tandis que la conduite d'échappement 25 communique également de préférence avec le carter d'huile 35 du moteur en formant ainsi un circuit fermé.

Eventuellement, on peut prévoir une variante selon laquelle les conduites 22 et 25 sont reliées à une réserve de fluide hydraulique de manière à former aussi un circuit fermé.

Selon une autre caractéristique particulière de ce dispositif, le vérin comprend un moyen de rappel 28, notamment élastique, tel qu'un ressort, du piston 21 du vérin 10 contre l'extrémité libre 29 du corps 20 opposée à celle 23 liée à la chaîne cinématique 34 et dont la force de rappel est inférieure à celle du ressort 8 de rappel de la soupape 2 sur son siège 9.

Selon une autre caractéristique avantageuse de ce dispositif, la conduite d'admission 22 peut comprendre un étranglement 30 ou diaphragme à orifice calibré pour limiter le débit du fluide hydraulique lorsque le moyen de communication 26 est ouvert aux faibles régimes.

Dans l'exemple représenté, le vérin hydraulique 10 est réalisé au niveau du poussoir, le poussoir constituant le corps 20 du vérin 10 tandis que la tige 6 de culbuteur est liée au piston 21 du vérin 10. Selon ce mode de réalisation particulier, la conduite d'échappement 25 du fluide hydraulique peut déboucher dans le vérin 10 sensiblement perpendiculairement à l'axe de poussée du poussoir 20 et de la tige de culbuteur 6 de la soupape d'admission 2 et à une certaine distance de l'extrémité 23 du corps 20 liée à la chaîne cinématique 34 de façon à éviter lors du mouvement relatif du piston 21 dans le corps 20 du vérin l'expulsion complète du fluide hors du vérin 10 comme cela sera explicité plus loin.

Selon un mode de réalisation préférentiel, lorsque le galet 4 du poussoir repose sur le profil 15 de base de la came 3, comme représenté aux figures 1 et 4, la zone 36 de paroi périphérique de l'extrémité inférieure 37 du piston 21 du vérin est située en regard de l'orifice 33 du vérin 10 communiquant avec la conduite d'échappement 25, cette zone 36 de paroi périphérique étant sensiblement plane et étant située à une distance prédéterminée du bord inférieur 32 de l'orifice 33 du vérin 10. Bien entendu, la distance entre la zone 36 de la paroi périphérique de l'extrémité inférieure 37 du piston et le bord inférieur 2 de l'orifice 33 détermine la valeur de la course morte précitée du profil de la came 3.

De préférence, l'axe de l'orifice 33 du vérin 10 est coaxial avec l'orifice 38 d'extrémité de la conduite d'échappement 25 (voir figure 4). Avantageusement, l'axe de l'orifice 33 passe par le plan de la zone 36 de paroi périphérique de l'extrémité inférieure 37 du piston 21 du vérin 10 (figures 1 et 4).

A ce sujet, on doit signaler de manière annexe qu'il résulte de cette structure également une course morte dans le profil habituel de levée de la came 3 se terminant en D aux figures 4 et 5, cette position étant représentée par la figure 2, correspondant à un angle au centre B aux figures 4 et 5.

Pour éliminer cette course morte en début de levée de la came 3, il suffit de déplacer la position de la conduite d'échappement 25 comme représenté en traits mixtes à la figure 4 en 25'. Dans ce
cas, l'axe de l'orifice 38' d'extrémité de la
conduite d'échappement 25' est décalé vers le
haut par rapport à l'axe de l'orifice 33, la valeur
de ce décalage étant bien entendu prédéterminée.
On obtient alors le profil 39 de levée de la soupape
d'admission, représenté en pointillés à la figure 5,
en fonction de l'angle de rotation de l'arbre à
came 3.

On doit noter également que selon une caractéristique avantageuse, le bossage supplémentaire 11
précité est prévu de préférence pour correspondre
à un angle au centre égal à environ 10 à 65°, de
préférence 35 à 50° d'angle de rotation d'arbre
à cames tandis que le point C précité pour lequel
se produit la fermeture de la soupape d'admission
2 aux faibles régimes est avantageusement prévu
au voisinage  du point mort bas, de préférence pour
correspondre à 0 à 20° d'angle de rotation de l'arbre
à came après le point mort bas, encore de préférence
entre 10 et 15° d'angle de rotation de l'arbre à
cames après le point mort bas de sorte que aux
régimes élevés, l'instant E de fermeture retardée
de la soupape d'admission 2 est situé à environ
30 à 65°, de préférence 50 à 60°, après le point
mort bas en angle de rotation de l'arbre à cames.

Selon une variante de réalisation représentée à
la figure 7, le vérin hydraulique est réalisé au
niveau du culbuteur 7 qui est réalisé dans ce cas
en deux parties 40, 41 articulées sur un même axe
42, une partie (40) étant d'une part liée à la
tige du culbuteur 6 et d'autre part au corps 43
ou au piston 44 (au piston 44 dans l'exemple
représenté) du vérin 45 tandis que l'autre partie (41) est liée d'autre part à la soupape 2 et d'autre part au piston 44 ou au corps 43 du vérin 45 (au corps 43 du vérin 45 dans l'exemple représenté).

Dans ce cas, les conduites précitées d'admission et d'échappement du fluide hydraulique du vérin 45 sont percées dans les parties 40, 41 respectives du culbuteur (conduites 46 et 47, respectivement) et aboutissent respectivement sur des canaux 48, 49 réalisés dans l'axe 42 et communiquant soit avec une réserve de fluide hydraulique soit avec le carter 35 d'huile en formant ainsi un circuit fermé. Elles peuvent comporter bien entendu de préférence un clapet anti-retour et une vanne comme dans le mode de réalisation précédent des figures 1 à 4.

Selon une caractéristique particulière, le piston 44 du vérin 45 a sensiblement la forme d'un manchon cylindrique creux, les conduites 46 et 47 aboutissent dans le vérin 45 sensiblement parallèlement à l'axe de coulissement du piston et la paroi interne 50 de l'extrémité 51 du corps 43 liée à la chaîne cinématique de commande de la soupape d'admission 2 comprend une rainure annulaire 53 permettant de former un joint hydraulique lors du mouvement relatif du piston 44 dans le vérin 45, entre l'extrémité annulaire 54 du piston 44 et la paroi interne 50 de l'extrémité 51 du vérin 45. Bien entendu, un moyen de rappel 55 tel qu'un ressort est avantageusement disposé entre le piston 44 et l'extrémité 51 du vérin 45.

Le fonctionnement du dispositif de la présente invention va être illustré par rapport au premier mode de réalisation faisant l'objet des figures 1 à 6 étant bien entendu qu'il s'applique également à la variante de réalisation faisant l'objet de la figure 7 et est le suivant :

I. Démarrage et faibles régimes :

En référence aux figures 1 à 5, le galet 4 du poussoir 5 prenant appui sur la came 3 de l'arbre à cames se trouvant à la position angulaire zéro, correspondant au début du profil de raccordement 16 évolutif du bossage principal 14, comme représenté aux figures 1 et 4, la soupape d'admission 2 est fermée et prend appui contre son siège 9. D'autre part, et étant donné que l'on est aux faibles régimes et/ou au démarrage l'organe externe 27 qui est asservi au régime actuel du moteur et n'agit qu'aux faibles régimes et/ou au démarrage celui-ci commande l'ouverture du moyen de communication 26 de manière à laisser s'échapper le fluide hydraulique du vérin hydraulique 10.

Lors de la commande en rotation de la came 3 par l'arbre à came, le profil de raccordement évolutif 16 agit sur le galet 4 qui entraîne à son tour le poussoir 5 et le corps 20 du vérin 10 qui entraîne un mouvement relatif du corps 20 relativement au piston 21 sans que ce dernier ne bouge étant donné que le moyen de rappel 28 a une force de rappel inférieure à celle du ressort 8 de rappel de la soupape 2 sur son siège 9 et que le moyen de communication 26 est ouvert ce qui provoque l'écoulement du fluide hydraulique contenu dans la cavité 31, définie entre le corps 20 et le piston 21 (Voir figure 4), et au-dessus du bord inférieur 32 de l'orifice 33 communiquant avec la conduite d'échappement 25 et ce jusqu'à ce que ce mouvement relatif aboutisse au masquage de l'orifice 33 par le piston 21, comme représenté à la figure 2. On doit noter que jusqu'à cet instant, qui est représenté par le point D de la came à la figure 4 et sur le diagramme de la figure 5, la soupape d'admission 2 prend encore appui contre son siège 9 de sorte que l'angle au centre B défini par l'arc OD constitue une période de transmission avec retard de la commande de la came 3. Cet angle B est par exemple égal à 18° de rotation d'arbre à cames.

Ensuite, en poursuivant sa rotation sous l'effet de l'arbre à cames, la came 3 décrit l'angle au centre F qui forme encore un profil de raccordement évolutif 17 du bossage principal 14. Il se produit la levée de la soupape 2 étant donné que le piston 21 du vérin 10 ayant masqué l'orifice 33 de la conduite d'échappement 25, le fluide hydraulique contenu dans la cavité 31 ne peut plus s'échapper et, comme il est en outre incompressible, le piston 21 est alors rigidement lié au corps 20 du vérin 10 et se déplace avec lui. On doit noter que à l'instant G on atteint la hauteur maximale H de la came 3 (voir figures 3 et 5) tandis que la levée de la soupape n'est que partielle et correspond à une hauteur radiale 1 de profil actif de la came 3. Cet angle F est par exemple égal à 34° de rotation de l'arbre à cames. En poursuivant la rotation de l'arbre à cames, la came 3 décrit ensuite l'angle I pour lequel le bossage 18 de la portion en arc de cercle du bossage 14 de la came correspond à une levée partielle de la soupape d'admission 2 à une valeur sensiblement constante 1 et qui est notablement inférieure à la levée H de pleine ouverture de la soupape 2. On doit noter que dans l'exemple représenté, le point mort haut représenté en PMH à la figure 5, coincide sensiblement avec le point G. L'angle I par exemple est égal à 44° de rotation d'arbre à cames.

Ensuite, la came 3 décrit l'angle J, par exemple égal à 58° de rotation d'arbre à cames, pour lequel le bossage évolutif 19 commande la fermeture totale de la soupape 2 à l'instant C sous l'effet du ressort de rappel 8 de la soupape 2 qui, comme mentionné précédemment, a une force de rappel supérieure à celle du moyen de rappel 28 de sorte que la chaîne cinématique de commande se trouve sensiblement dans la position représentée à la figure 2 mais avec le galet 4 au point C de la came 3 par exemple 12° après le point mort bas (PMB).

Enfin, la came décrit l'angle A, par exemple égal à 40°, pour arriver au point E, la soupape 2 étant bien entendu fermée pendant ce temps là tandis que le galet 4 du poussoir 5 suit bien entendu le profil de la came sous l'effet du ressort 28 qui se détend de sorte que la chaîne cinématique de commande se trouve sensiblement dans la position représentée à la figure 1 mais avec le galet 4 au point E de la came. Lorsque la came décrit l'angle A la chambre hydraulique 31 est de nouveau en communication avec les conduites 22 et 25 de sorte que celle-ci se remplit à nouveau de fluide hydraulique pour compenser la quantité précédemment expulsée.

Ainsi, on doit noter qu'aux faibles régimes, on introduit dans la chaîne cinématique de commande 34 de chaque soupape d'admission 2 une période de transmission avec retard de la commande de la came 3 en provoquant ainsi une limitation de la levée de la soupape d'admission ainsi que, principalement, une diminution du retard à la fermeture de la soupape d'admission 2. Par rapport au profil de la came, on peut noter que cette diminution du retard correspond à l'angle A et est par conséquent égale à 40° ce qui est loin d'être négligeable.

A ce sujet, on doit noter que cette diminution du retard à la fermeture de la soupape d'admission 2 a pour corrolaire un retard pour son ouverture égal à l'angle B cet angle étant d'une valeur faible étant donné la pente prononcée du profil de la came 3 à cet endroit. Ce retard à l'ouverture de la soupape d'admission 2 peut en outre être favorable car on a intérêt dans certains cas à limiter aux faibles régimes le balayage dû au recouvrement mutuel des périodes d'ouverture des soupapes respectivement d'admission 2 et d'échappement d'un même cylindre, ce balayage pouvant être néfaste car aux faibles régimes des gaz d'échappement peuvent être réaspirés dans le cylindre et dans le conduit d'admission ce qui peut provoquer un encrassement de ceux-ci.

Cependant, pour certains types de suralimentation, il peut être interessant d'obtenir le point d'ouverture de la soupape d'admission en coincidence avec le point 0 de début de profil de la came 3. Ceci est obtenu, comme indiqué précédemment, par une modification du positionnement de la conduite d'échappement 20, cette position étant celle représentée en traits mixtes en 25' à la figure 4.

Dans ce cas, la vidange partielle de la cavité 31 du vérin 10 ne se fait plus en début de levée mais en fin de levée ce qui a pour avantage de permettre un meilleur contrôle de l'accélération de la soupape d'admission 2 qui ne dépend plus de phénomènes hydrauliques tandis que le point d'ouverture de la soupape d'admission 2 est alors indépendant du mode de fonctionnement (à faible régime ou à régime élevé). En outre, le diaphragme 30 qui était nécessaire pour diminuer le débit de fluide hydraulique selon le mode de réalisation des figures 1 à 3 devient superflu. En effet, la quantité de fluide hydraulique rentrant dans la cavité 31 est juste suffisante pour le remplir puisqu'il n'y a plus de communication directe au départ entre la cavité 31 et l'orifice 38' d'extrémité de la conduite d'échappement 25'.

On doit noter en passant que l'épaulement 39a du profil de levée de la soupape d'admission 2 (voir figure 5) est dû au temps de vidange partielle de fluide hydraulique présent dans la cavité 31 entre la zone de paroi 36 du piston 21 et le bord inférieur 32 de l'orifice 33 du vérin 10. On doit noter également que l'on obtient une levée partielle ou tronquée de la soupape d'admission 2, la hauteur de cette levée partielle de la soupape d'admission 2 correspondant à la distance séparant le bord supérieur de l'orifice 33 du bord inférieur de l'orifice 38' d'extrémité de la conduite d'échappement 25'.

On doit noter encore que les modes de réalisation du vérin hydraulique représentés aux figures 1 à 4 et 7 sont prévus pour garder toujours du fluide hydraulique entre le piston et le corps du vérin de sorte que au moment de l'ouverture de la soupape d'admission 2 suite à la formation d'une liaison rigide piston-corps du vérin, il se produit un amortissement hydraulique évitant des à-coups préjudiciaires, ce qui est particulièrement avantageux. Par ailleurs, la pression d'alimentation en fluide hydraulique est en général de l'ordre de 3,5 Bars à 7,5 Bars, ce qui correspond à la pression d'huile moteur de graissage normale. En outre, le moyen d'étranglement 30 ou diaphragme permet de limiter l'écoulement du fluide hydraulique lors de son fonctionnement aux faibles régimes ce qui évite l'utilisation d'une pompe à fluide hydraulique plus importante.

II. Régime élevé

Lorsque le régime du moteur augmente et franchit un certain seuil pour lequel le moteur est considéré comme fonctionnant à un régime élevé c'est-à-dire par exemple pour une pression moyenne effective de 8 à 12 Bars, l'organe externe 27 ferme le moyen de communication 26 de sorte que le piston 21 du vérin 10 est en permanence lié rigidement au corps 20 et il n'y aura plus de période de transmission avec retard de la commande de la came 3. Cet organe 27 peut par exemple être asservi par un moyen mécanique et/ou pneumatique et/ou électrique à la vitesse de rotation du moteur et/ou à la pression d'air de suralimentation, dépendant de la charge du moteur, et/ou à la quantité de combustible injectée correspondant à la position des crémaillères de régulation du débit des pompes d'injection. On doit noter qu'une combinaison de deux de ces trois paramètres est particulièrement préférée et que ces paramètres définissent si le régime est faible ou élevé.

En référence à la figure 6, le galet 4 étant au point zéro de la came 3, lorsque la came décrit les angles B + F, soit dans le cas représenté 52°, pour arriver au point G, il s'est produit dès le point O la levée de la soupape 2 de son siège 9, cette soupape 2 étant pleinement ouverte au point G, soit de la hauteur H. Ensuite lorsque la came décrit l'angle I, la soupape 2 est maintenue en position pleinement ouverte tandis que lorsque la came 3 décrit l'angle J, la soupape 2 se ferme depuis l'instant K jusqu'au point C où elle est encore partiellement ouverte, avec une section de passage réduite par rapport à la section de passage maximale correspondant à la pleine ouverture de la soupape 2. Enfin, lorsque la came décrit l'angle A, pour rejoindre le profil de base 15, la soupape 2 continue à se fermer pour être entièrement fermée à l'instant E. On doit noter qu'on prolonge donc notablement la période d'ouverture de la soupape d'admission 2 par rapport aux faibles régimes avec un profil unique de la came 3. L'instant de fermeture de la soupape d'admission 2 se produit donc dans l'exemple représenté 52° de rotation d'arbre à cames après le point mort bas ce qui est notablement au-delà de l'instant normal de fermeture après le point mort bas.

En résumé, l'invention permet de provoquer la fermeture de chaque soupape d'admission 2 avant l'instant normal de fermeture après le point mort bas en diminuant ainsi son retard à la fermeture, cette fermeture se produisant de préférence entre 0 et 20° d'angle de rotation de l'arbre à cames après

0024994

22

le point mort bas ce qui permet d'obtenir un taux de compression maximum aux faibles régimes, tandis que pour les régimes élevés, on prolonge notablement la période d'ouverture de chaque soupape d'admission 2 au-delà de l'instant normal de fermeture après le point mort bas en l'empêchant de se fermer entièrement à cet instant mais en réduisant la section de passage entre la soupape 2 et son siège 9 à une valeur relativement faible (de préférence 20 à 60%) par rapport à la section de passage maximale correspondant à la pleine ouverture de la soupape 2, ce qui permet d'obtenir un taux de compression effectif sensiblement réduit auxdits régimes élevés.

On doit noter enfin que l'ouverture partielle de la soupape d'admission 2 aux faibles régimes n'est pas néfaste car elle est suffisante pour permettre un remplissage correct du cylindre.

Bien entendu, on peut apporter diverses modifications aux modes de réalisation décrits, en particulier lorsque le vérin hydraulique est réalisé au niveau du poussoir, le poussoir peut être lié soit au corps soit au piston du vérin tandis que la tige de culbuteur peut être liée soit au piston soit au corps, respectivement. Il en est de même pour la réalisation de la figure 7 au niveau du culbuteur où l'une des deux parties 40, 41 de celui-ci peut être liée soit au corps soit au piston du vérin tandis que l'autre est liée soit au piston soit au corps respectivement.

D'autre part, par expression "liaison cinématiquement compatible" utilisée précédemment on entend que la liaison ne gêne pas le fonctionnement cinématique de la chaîne de commande 34.

Par conséquent, l'invention n'est nullement
limitée aux deux modes de réalisation décrits et
représentés qui n'ont été donnés qu'à titre
d'exemple. En particulier, elle comprend tous
les moyens constituant des équivalents techniques
des moyens décrits, ainsi que leurs combinaisons
si celles-ci sont exécutées suivant son esprit
et mises en oeuvre dans le cadre des revendications
qui suivent.

Revendications

1. Procédé pour améliorer le rendement d'un moteur à combustion interne, notamment suralimenté, par variation sélective de taux de compression selon le régime du moteur, caractérisé en ce qu'aux faibles régimes on provoque la fermeture de chaque soupape d'admission (2) avant l'instant normal de fermeture après le point mort bas en diminuant ainsi son retard à la fermeture, tandis que lorsque le régime du moteur augmente au-delà d'un certain seuil pour lequel le moteur est considéré comme fonctionnant à un régime élevé, on prolonge notablement la période d'ouverture de chaque soupape d'admission (2) au-delà de l'instant normal de fermeture après le point mort bas en l'empêchant de se fermer entièrement à cet instant mais en réduisant la section de passage entre la soupape (2) et son siège (3) à une valeur relativement faible par rapport à la section de passage maximale correspondant à la pleine ouverture de la soupape (2).

2. Procédé selon la revendication 1, pour moteur comprenant une chaîne cinématique (34) de commande de chaque soupape s'étendant de l'arbre à cames à ladite soupape (2) inclus, caractérisé en ce qu'aux faibles régimes, on introduit dans ladite chaîne cinématique (34) de commande de chaque soupape d'admission (2) une période de transmission avec retard de la commande de la came (3) en provoquant ainsi la diminution précitée du retard à la fermeture de la soupape d'admission (2) ainsi qu'accessoirement une limitation de sa levée.

3. Procédé selon la revendication 2, caractérisé en ce que la période de transmission avec retard précitée est prévue de façon à obtenir une levée partielle de la soupape d'admission (2) correspondant approximativement à 40 à 80 % de la levée totale normale de la soupape d'admission (2) tandis que de préférence la section de passage réduite précitée est au maximum d'environ 20 à 60 % de la section de passage libre d'ouverture maximale de la soupape d'admission (2).

4. Procédé selon l'une des revendications 1 à 3, caractérisé en ce qu'aux faibles régimes, on provoque la fermeture de la soupape d'admission (2) au voisinage du point mort bas, de préférence entre 0 et 20° d'angle de rotation de l'arbre à cames après le point mort bas, encore de préférence entre 10 et 15° après le point mort bas.

5. Procédé selon l'une des revendications 1 à 4, caractérisé en ce qu'aux régimes élevés, l'instant de fermeture retardée de la soupape d'admission (2) est situé à environ 30 à environ 65°, de préférence 50 à 60°, d'angle de rotation de l'arbre à cames après le point mort bas.

6. Dispositif pour moteur à soupape comportant une chaîne cinématique (34) de commande de chaque soupape s'étendant de l'arbre à cames à ladite soupape inclus, caractérisé en ce qu'il comprend dans la chaîne cinématique (34) de commande de chaque soupape d'admission (2) un moyen (10) provoquant une fermeture de ladite soupape d'admission (2) avant l'instant normal de fermeture après le point mort bas, et asservi au régime actuel du moteur de manière à ne fonctionner qu'aux faibles régimes; et en ce qu'il comprend un moyen (11) prolongeant notablement la période d'ouverture de chaque soupape d'admission (2) au-delà de l'instant normal de fermeture après le point mort bas en l'empêchant de se fermer entièrement à cet instant, et
n'agissant qu'aux régimes élevés.

7. Dispositif selon la revendication 6, caractérisé
en ce que le moyen (10) de fermeture avancée à faible
régime comprend un système de transmission avec retard
de la commande de la came (3) provoquant une course
morte du profil de la came.

8. Dispositif selon la revendication 6 ou 7, caractérisé en ce que le moyen (11) de fermeture retardée de
la soupape d'admission aux régimes élevés est formé
par un bossage supplémentaire de la came (3) de commande de chaque soupape d'admission (2) permettant un
maintien d'ouverture résiduelle de celle-ci et qui se
raccorde de façon sensiblement continue et progressive
à ses extrémités opposées (12, 13) respectivement
au bossage principal (14) de commande d'ouverture et
de fermeture de la soupape d'admission (2) et au profil
circulaire de base (15) de la came (3).

9. Dispositif selon la revendication 7, caractérisé en
ce que le système (10, 45) de transmission avec retard
précitée est formé par un vérin hydraulique intercalé
dans la chaîne cinématique (34) de commande de chaque
soupape d'admission (2) en la séparant ainsi en deux
parties dont l'une est liée de manière cinématique
compatible au corps (20) du vérin (10, 45) tandis
que l'autre partie est liée au piston (21) du vérin
(10, 45) également de manière cinématique compatible.

10. Dispositif selon la revendication 9, caractérisé
en ce que le vérin hydraulique (10, 45) comprend au
moins une conduite d'admission (22) d'un fluide hydraulique incompressible entre l'extrémité (23) du corps

(20) liée à la chaîne cinématique (34) et le piston (21) et comportant un moyen (24) anti-retour tel qu'un clapet; et au moins une conduite d'échappement (25) dudit fluide hors du vérin (10) ladite conduite d'échappement (25) étant pourvue d'un moyen de communication (26) tel qu'une vanne commandé par un organe externe (27) asservi à la valeur actuelle du régime du moteur.

11. Dispositif selon la revendication 9 ou 10, caractérisé en ce que le vérin (10, 45) comprend un moyen de rappel (28, 55) notamment élastique du piston (21, 44) du vérin (10, 45) contre l'extrémité libre (23) du corps (20, 43) opposée à celle (23) liée à la chaîne cinématique (34) et dont la force de rappel est inférieure à celle du ressort (8) de rappel de la soupape (2) sur son siège (9).

12. Dispositif selon la revendication 10 ou 11, caractérisé en ce que la conduite d'admission (22, 46) débouche dans le carter (35) d'huile du moteur et comporte au moins une pompe d'alimentation tandis que la conduite d'échappement (25, 47) communique de préférence également avec le carter (35) d'huile du moteur.

13. Dispositif pour moteur dont la chaîne cinématique comprend un poussoir (5), une tige (6) de culbuteur et un culbuteur (7) selon l'une des revendications 9 à 12, caractérisé en ce que le vérin hydraulique (10) est réalisé au niveau du poussoir (5), le poussoir (5) étant lié au corps (20) ou au piston (21) du vérin (10) tandis que la tige (6) de culbuteur (7) est liée au piston (21) ou au corps (20) dudit vérin (10).

14. Dispositif selon la revendication 13, caractérisé en ce que la conduite d'échappement (25) du fluide hydraulique débouche dans le vérin (10) sensiblement perpendiculairement à l'axe de poussée du poussoir (5) et de la tige (6) de culbuteur de la soupape d'admission (2) et, dans le cas où le corps (20) du vérin (10) est lié au poussoir (5), à une certaine distance de l'extrémité du corps (20) liée à la chaîne cinématique (34), de façon à éviter lors du mouvement relatif du piston (21) dans le corps (20) du vérin (10) l'expulsion complète du fluide hydraulique hors du vérin (10).

15. Dispositif selon la revendication 14, caractérisé en ce que, lorsque le poussoir (5) repose sur le profil (15) de base de la came (3), la zone (36) de paroi périphérique de l'extrémité inférieure (37) du piston (21) du vérin est située en regard de l'orifice (33) du vérin (10) communiquant avec la conduite d'échappement (25) du fluide hydraulique du vérin, cette zone (36) de paroi périphérique étant sensiblement plane et étant située à une distance prédéterminée du bord inférieur (32) de l'orifice (33) du vérin (10) communiquant avec ladite conduite d'échappement.

16. Dispositif selon la revendication 15, caractérisé en ce que l'axe de l'orifice(33)du vérin (10) est coaxial avec l'orifice(38)d'extrémité de la conduite d'échappement (25) précitée.

17. Dispositif selon la revendication 16, caractérisé en ce que la conduite d'admission (22) comprend un étranglement (30) ou diaphragme à orifice calibré pour limiter l'écoulement du fluide hydraulique lorsque le moyen de communication (26) est ouvert.

18. Dispositif selon la revendication 15, caractérisé en ce que l'axe de l'orifice(38') d'extrémité de la conduite d'échappement (25') est décalé vers le haut par rapport à l'axe de l'orifice (33) du vérin (10) d'une distance prédéterminée, l'orifice d'extrémité de la conduite d'échappement étant obturé par le corps du vérin.

19. Dispositif pour moteur dont la chaîne cinématique comprend un poussoir (5), une tige (6) de culbuteur et un culbuteur (7) selon l'une des revendications 9 à 12, caractérisé en ce que le vérin hydraulique est réalisé au niveau du culbuteur (7) qui est lui-même réalisé en deux parties (40, 41) articulées sur le même axe (42), une partie (40) étant d'une part liée à la tige (6) de culbuteur et d'autre part au corps (43) ou au piston (44) du vérin (45) tandis que l'autre partie (41) est liée d'une part à la soupape d'admission (2) et d'autre part au piston (44) ou au corps (43) du vérin (45), respectivement.

20. Dispositif selon la revendication 19, caractérisé en ce que les conduites (46, 47) précitées sont percées dans les parties (40, 41) respectives du culbuteur et aboutissent sur des canaux (48, 49) réalisés dans l'axe (42) et communiquant soit avec une réserve de fluide hydraulique soit avec le carter (35) en formant un circuit fermé.

21. Dispositif selon la revendication 20, caractérisé en ce que le piston (44) a sensiblement la forme d'un manchon cylindrique creux, les conduites (46, 47) aboutissant dans le vérin (45) sensiblement parallèlement à l'axe de coulissement du piston et la paroi interne (50) de l'extrémité (51) du corps (43) liée à la chaîne cinématique comprend une rainure annulaire (53) qui permet de former un joint hydraulique lors du mouvement relatif du piston (44) dans le vérin (45) entre l'extrémité annulaire (54) du piston (44) et ladite paroi interne (50) de l'extrémité (51) du vérin (45).

22. Dispositif selon l'une des revendications 8 à 21, caractérisé en ce que la hauteur radiale maximale (h) du bossage supplémentaire (11) relativement au profil circulaire de base (15) de la came (3) est comprise entre 20 et 60 % de la hauteur radiale (H) de la partie circulaire (18) du bossage principale (14) relativement au profil de base (15) de la came (3).

23. Dispositif selon l'une des revendications 8 à 22, caractérisé en ce que le bossage supplémentaire (11) précité est prévu pour correspondre à un angle au centre égal à environ 10 à 65°, de préférence 35 à 50°, d'angle de rotation d'arbre à cames.

24. Dispositif selon l'une des revendications 7 à 23, caractérisé en ce que la course morte précitée est prévue pour correspondre à une hauteur radiale du profil de la came sensiblement égale à la hauteur radiale maximale (h) du bossage supplémentaire (11).

25. Moteur à combustion interne, de préférence moteur Diesel, notamment suralimenté, caractérisé en ce qu'il est équipé d'un dispositif selon l'une quelconque des revendications 6 à 24.

Fig. 3.

Fig. 2.

Fig. 1.

Fig. 4.

2/3

0024994

Fig. 5.

Fig. 6.

Fig. 7.

**Office européen des brevets**

# RAPPORT DE RECHERCHE EUROPEENNE

Numéro de la demande

EP 80 40 1226

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| X | <u>US - A - 4 114 643</u> (NISSAN) <br> * figures 2,4,5; colonne 2, ligne 16 à colonne 6, ligne 60 * <br><br> -- <br><br> <u>US - A - 4 134 371</u> (HAUSKNECHT) <br> * figure 1; colonne 2, ligne 31 à colonne 3, ligne 61 * <br><br> -- <br><br> <u>FR - A - 1 294 510</u> (BRIGGS & STRATTON) <br> * figures 3,4; page 5, résumé * <br><br> -- <br><br> <u>FR - A - 2 297 321</u> (HONDA) <br> * figures 1,4; page 4, lignes 1-15 * <br><br> -- <br><br> <u>FR - A - 2 341 045</u> (BERTIN) <br> * page 8, ligne 1 à page 9, ligne 4 * <br><br> --- -- | 1-6, 9-15 <br><br><br><br> 1-3, 19 <br><br><br><br> 1,7,8, 22-24 <br><br><br> 1,7,8, 22-24 <br><br><br> 1-6, 9-15 | F 01 L 31/22 <br> F 02 D 13/06 <br><br><br><br><br> **DOMAINES TECHNIQUES RECHERCHES (Int. Cl. ³)** <br><br> F 01 L <br> F 02 D <br> F 02 B |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-10-1980 | WASSENAAR |

OEB Form 1503.1 06.78